Europäisches Patentamt

European Patent Office

Office européen des brevets

(11) Veröffentlichungsnummer: **0 121 037**
**B1**

(12) # EUROPÄISCHE PATENTSCHRIFT

(45) Veröffentlichungstag der Patentschrift:
20.04.88

(51) Int. Cl.⁴: **G 06 F 9/38**

(21) Anmeldenummer: **84100394.0**

(22) Anmeldetag: **16.01.84**

(54) Speicherprogrammierbare Steuerung.

(30) Priorität: **28.01.83 DE 3302929**

(43) Veröffentlichungstag der Anmeldung:
**10.10.84 Patentblatt 84/41**

(45) Bekanntmachung des Hinweises auf die Patenterteilung:
**20.04.88 Patentblatt 88/16**

(84) Benannte Vertragsstaaten:
**AT BE CH DE FR GB IT LI SE**

(56) Entgegenhaltungen:
**DE - A - 2 817 536**
**DE - A - 3 101 270**

**SIEMENS-ENERGIETECHNIK, Band 2, Heft 9, 1980, Seiten 360-363, Erlangen, DE; R. HAHN u.a.: "Neuheiten im speicherprogrammierbaren Automatisierungssystem SIMATIC S 5"**

(73) Patentinhaber: **Siemens Aktiengesellschaft Berlin und München, Wittelsbacherplatz 2, D-8000 München 2 (DE)**

(72) Erfinder: **Ninnemann, Peter, Dipl.-Ing., Kiebheimer Strasse 6, D-8551 Röttenbach (DE)**
Erfinder: **Wollscheid, Dieter, Dipl.-Ing., Oppelner Strasse 21, D-8520 Erlangen (DE)**

## Beschreibung

Die Erfindung bezieht sich auf eine speicherprogrammierbare Steuerung mit zyklisch durchlaufenem Anwenderprogramm, bestehend zumindest aus:

a) einem Wortprozessor zur Bearbeitung von Betriebssystem- und Wortbefehlen,

b) einem Bitprozessor zur Bearbeitung binärer Verknüpfungsbefehle,

c) Betriebssystemspeicher, Anwenderprogrammspeicher, Datenspeicher mit binärem Prozessabbild und Peripheriebaugruppen und

d) Bussen zur Verbindung der vorgenannten Komponenten.

Speicherprogrammierbare Steuerungen sind beispielsweise in der Zeitschrift Siemens Energietechnik 1979, Heft 2, Seiten 43 bis 47; in Heft 4, Seiten 136 bis 139 oder in der Zeitschrift Siemens Energietechnik 1980, Heft 9, Seiten 360 bis 363 sowie in der europäischen Patentschrift 10 170 und den US-PS 3 921 146 oder 3 942 158 näher beschrieben.

Eine komfortablere speicherprogrammierbare Steuerung soll sowohl logische Verknüpfungen von ein Bit breiten Daten durchführen als auch komplexe Funktionen mit wortbreiten Daten, z.B. Arithmetikfunktionen, Datentransfer, Zeitenbildung und Zählvorgänge, ausführen können. Wesentlich ist hierbei, dass in dem zyklisch arbeitenden Programm die rein binären Verknüpfungsbefehle sehr viel häufiger durchlaufen werden als die komplexen Funktionen. Die Laufzeit des Gesamtprogrammes und damit die Reaktionszeit der Steuerung hängt also wesentlich stärker von der Ausführungszeit der binären Verknüpfungsbefehle als von der Laufzeit der komplexen Funktionen ab.

Es ist daher vorteilhaft, ein Mehrprozessorsystem zu verwenden, bei dem die Ausführung der Binärbefehle einem gesonderten schnellen Bitprozessor übertragen wird, wogegen ein relativ langsamer Wortprozessor die komplexen Funktionen ausführen kann (vgl. z.B. Zeitschrift Siemens Energietechnik 1980, Heft 9, Seite 361). Bei der bekannten speicherprogrammierbaren Steuerung mit Wort- und Bitprozessor sind an die Busse der Prozessoren auch die Eingangs- und Ausgangsbaugruppen angeschlossen. Da diese Bussysteme daher die Prozessorbaugruppen verlassen und gegebenenfalls auch über den Gehäuserahmen des eigentlichen Steuergerätes hinausgehen müssen, ergeben sich relativ hohe Buslaufzeiten und damit relativ hohe Befehlsausführungszeiten.

Die Aufgabe der vorliegenden Erfindung besteht darin, einen einfachen Aufbau einer speicherprogrammierbaren Mehrprozessorsteuerung der eingangs genannten Art anzugeben, mit der sich die Laufzeit des Gesamtprogrammes minimieren lässt.

Diese Aufgabe wird erfindungsgemäss durch folgende Merkmale gelöst:

e) Der Wortprozessor verfügt über einen gesonderten Peripheriebus zum Datenverkehr mit den Peripheriebaugruppen und einen davon getrennten internen Systembus zum Datenverkehr mit den übrigen genannten Komponenten,

f) der Datentransfer zwischen den Peripheriebaugruppen und dem Datenspeicher läuft ausschliesslich über den Wortprozessor, wobei der Bitprozessor bei einem Zugriff des Wortprozessors auf den Datenspeicher angehalten wird,

g) der Bitprozessor hat nur über eigene getrennte interne Busse Zugriff auf den Anwenderprogrammspeicher und den Datenspeicher,

h) der das Anwenderprogramm abarbeitende Bitprozessor geht beim Erkennen eines Wortbefehls in den Haltezustand und stösst hierdurch den Wortprozessor zur Abarbeitung des betreffenden Wortbefehls an und

i) der Wortprozessor startet nach Abarbeitung des Wortbefehls erneut den Bitprozessor.

Durch die Abkoppelung des Bitprozessors und des internen Systembusses des Wortprozessors von der Peripherie lassen sich Befehle sehr rasch ausführen und damit die gesamte Bearbeitungszeit des Programmes verkürzen.

Damit durch den an den Zyklusgrenzen erforderlichen Austausch des Prozessabbildes zwischen Peripherie und Datenspeicher die Laufzeit des Programmes nicht zu sehr anwächst, ist es ferner vorteilhaft, wenn die von den Prozesssignalformen der Peripheriebaugruppen kommenden Binärsignale wortbreit, z.B. 8 Bit breit, über Peripherie- und internen Systembus übertragen werden.

Anhand einer Zeichnung sei die Erfindung näher erläutert:

Die gestrichelt umrandete gezeichnete Zentraleinheit 3 der speicherprogrammierbaren Steuerung, die die von den Peripherieeinheiten kommenden Signale gemäss dem vorgegebenen Anwenderprogramm bearbeitet, besteht im wesentlichen aus einem Wortprozessor 1 und einem Bitprozessor 2. Der Wortprozessor 1 ist ein üblicher Mikroprozessor, z.B. 8 Bit breit organisiert, und dient zur Ausführung der komplexen Funktion mit wortbreiten Daten. Hierzu gehören z.B. arithmetische Operationen, Datentransfer, Zeitbildung und/oder Zählvorgänge. Der Wortprozessor 1 steuert und adressiert den sogenannten Peripheriebus 11, der über eine Treiberstufe 15 an seinen internen Bus 13 angeschlossen ist. An diesen Peripheriebus 11 sind die Ein- und Ausgabestufen 4 von und zum Prozess, intelligente Peripherie 5, wie z.B. Weg- und Geschwindigkeitsauswertungsbaugruppen und Koppelbausteine 6 zum Anschluss eines Rechners angeschlossen.

Der Wortprozessor 1 verfügt ferner über eine serielle Schnittstelle 14, mit der eine Verbindung zu einer Programmier- und Testeinrichtung hergestellt werden kann, und auch über einen über Treiberstufen 16 angeschlossenen internen Systembus 12, der die Prozessorbaugruppe nicht verlässt und damit sehr schnell ist. An diesen internen Systembus 12 sind der Betriebssystemspeicher 17 für den Wortprozessor und ein Arbeitsspeicher 18 angeschlossen; ferner hat der Wortprozessor über diesen Systembus 12 Zugriff zum Bitprozessor 2 und über Datenweichen 9 auch Zugriff zum steckbaren Anwenderprogrammspeicher 7 und zu dem Datenspeicher 8 mit Prozessabbild. Die Steuerung arbeitet lediglich mit diesem Prozessabbild der Eingangs- und Ausgangssignale der Peripheriebaugruppen und tauscht dieses Prozessabbild an den Zyklusenden mit der Peripherie aus.

Der schnelle Bitprozessor 2 hat über die Datenweichen 9 nur Zugriff zu Anwenderprogrammspeicher 7 und Datenspeicher 8. Dieser Bitprozessor 2 liest sequentiell die im Anwenderprogrammspeicher 7 stehenden Befehle des Anwenderprogrammes ab und manipuliert bei binären Verknüpfungsbefehlen entsprechend das Prozessabbild, d.h. die binären Daten im Datenspeicher 8. Stösst der Bitprozessor 2 auf einen Wortbefehl beim Lesen des Anwenderprogrammes, so hält er an und stellt dem Wortprozessor die notwendige Information zur Bearbeitung des Wortbefehls zur Verfügung, vorteilhaft in der Weise, dass dem Wortprozessor im Bitprozessor eine Einsprungadresse in einen entsprechenden Programmteil zur Befehlsausführung zur Verfügung gestellt wird. Ist der Wortbefehl – gegebenenfalls unter Zugriff auf Anwenderprogrammspeicher 7 und Datenspeicher 8 beendet, so startet der Wortprozessor 1 erneut den Bitprozessor 2, der in der Abarbeitung des Anwenderprogrammes fortfährt. Der Wortprozessor 1 ist dabei während seiner Befehlseinholung und während anderer Operationen nicht durch hohe Buslaufzeiten auf dem Peripheriebus belastet.

Der Wortprozessor 1 hat auch die Aufgabe des Datentransfers zwischen den Prozesssignalformen in den Peripheriebaugruppen 4 und dem Datenspeicher 8 zu besorgen. Hierzu benutzt er den Peripheriebus 11 und den internen Systembus 12. Um auch bei dem Datenaustausch die Zeiten möglichst klein zu halten, sind die Prozesssignalformen in den Peripheriebaugruppen 4 wortbreit (z.B. 8 Bit) organisiert, so dass jeweils mehrere Binärsignale, die z.B. Schalterstellungen «Ein», «Aus» entsprechen, gleichzeitig übertragen werden können.

Der Wortprozessor hat auch noch die Aufgabe der Bearbeitung von Betriebssystemfunktionen, wie z.B. Anlaufroutinen, Selbstdiagnose, Kopplung zur Programmier- und Testeinrichtung über die serielle Schnittstelle und Test- und Inbetriebnahmefunktion.

Der Wortprozessor 1 hantiert den Bitprozessor 2 wie einen intelligenten Peripheriebaustein. Da sowohl der Anwenderprogrammspeicher 7 als auch der Datenspeicher 8 von beiden Prozessoren angesprochen werden können, muss der Wortprozessor 1 bei einem Zugriff auf einen dieser beiden Speicher den Bitprozessor 2 anhalten. Beide Prozessoren können taktasynchron betrieben und bei Bedarf intern im Bitprozessor synchronisiert werden.

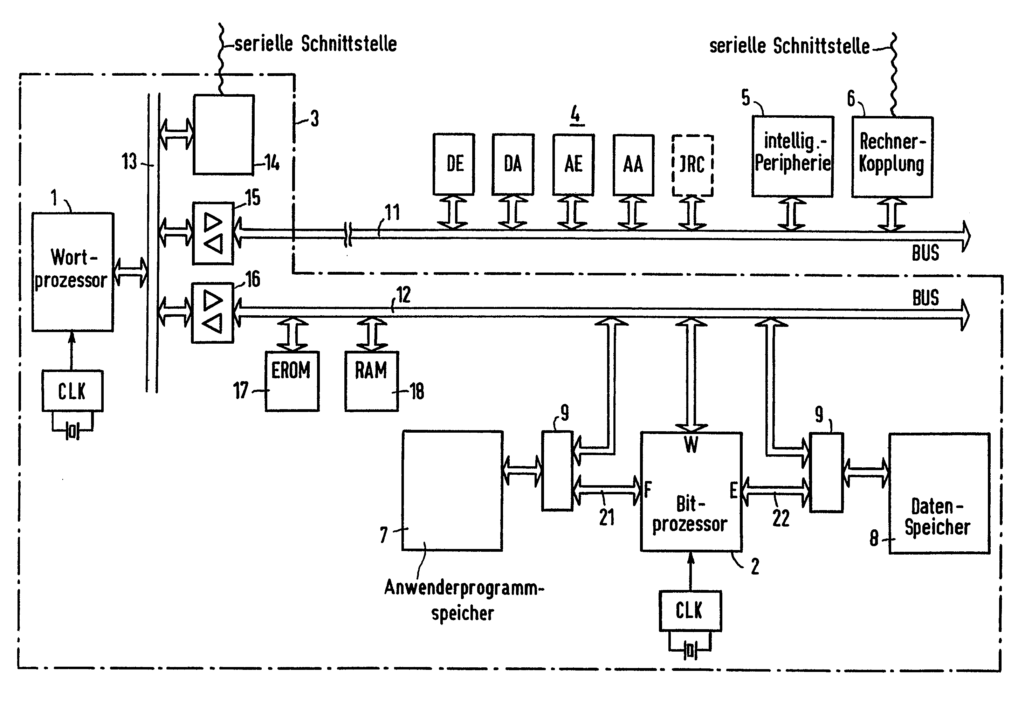

## Patentansprüche

1. Speicherprogrammierbare Steuerung mit zyklisch durchlaufenem Anwenderprogramm, bestehend zumindest aus:

a) einem Wortprozessor zur Bearbeitung von Betriebssystem- und Wortbefehlen.

b) einem Bitprozessor zur Bearbeitung von Binärverknüpfungsbefehlen,

c) Betriebssystemspeicher, Anwenderprogrammspeicher, Datenspeicher mit binärem Prozessabbild und Peripheriebaugruppen und

d) Bussen zur Verbindung der vorgenannten Komponenten, gekennzeichnet durch folgende Merkmale:

e) der Wortprozessor (1) verfügt über einen gesonderten Peripheriebus (11) zum Datenverkehr mit den Peripheriebaugruppen (4, 5) und einen davon getrennten internen Systembus (12) zum Datenverkehr mit den übrigen genannten Komponenten.

f) der Datentransfer zwischen den Peripheriebaugruppen (4, 5) und dem Datenspeicher (8) läuft ausschliesslich über den Wortprozessor (1), wobei der Bitprozessor (2) bei einem Zugriff des Wortprozessors (1) auf den Datenspeicher (8) angehalten wird,

g) der Bitprozessor (2) hat nur über eigene getrennte interne Busse (21, 22) Zugriff auf den Anwenderprogrammspeicher (7) und den Datenspeicher (8),

h) der das Anwenderprogramm abarbeitende Bitprozessor (2) geht beim Erkennen eines Wortbefehls in den Haltezustand und stösst hierdurch den Wortprozessor (1) zur Abarbeitung des betreffenden Wortbefehls an und

i) der Wortprozessor (1) startet nach Abarbeitung des Wortbefehls erneut den Bitprozessor (2).

2. Speicherprogrammierbare Steuerung nach Anspruch 1, dadurch gekennzeichnet, dass der über den Wortprozessor (1) laufende Datentransfer des Prozessabbildes zwischen den Peripheriebaugruppen (4, 5) und dem Datenspeicher (8) wortbreit organisiert ist.

3. Speicherprogrammierbare Steuerung nach Anspruch 1, dadurch gekennzeichnet, dass an den Peripheriebus (11) zusätzlich Baugruppen (6) zur Rechnerankopplung anschliessbar sind.

## Claims:

1. A store-programmable control unit comprising a user programme which is run cyclically, comprising at least:

a) a word processor for the processing of operations systems commands and word commands,

b) a bit processor for the processing of binary logic-linking commands,

c) operations system store, user programme store, data store with binary display and peripheral assemblies, and

d) buses for connecting the aforesaid components, characterised by the following features:

e) the word processor (1) has at its disposal a special peripheral bus (11) for data traffic with the peripheral assemblies (4, 5) and a separate, internal system bus (12) for data traffic with the other aforesaid components,

f) the data transfer between the peripheral assemblies (4, 5) and the data store (8) takes place exclusively via the word processor (1), where the bit processor (2) is stopped for the access of the word processor (1) to the data store (8),

g) the bit processor (2) has access to the user programme store (7) and the data store (8) only via separate, internal buses (21, 22),

h) on the recognition of a word command the bit processor (2), which processes the user programme, assumes the hold state and thus triggers the word processor (1) to process the respective word command, and

i) the word processor (1) re-starts the bit processor (2) following the processing of the word command.

2. A store-programmable control unit as claimed in claim 1, characterised in that the data transfer of the display between the peripheral assemblies (4, 5) and the data store (8), which takes place via the word processor (1), is organised with a breadth of one word.

3. A store-programmable control unit as claimed in claim 1, characterised in that assemblies (6) for computer coupling can be additionally connected to the peripheral bus (11).

**Revendications**

1. Commande à programme mémorisé, à programme utilisateur exécuté cycliquement, comprenant au moins:

a) un processeur de mots pour le traitement d'instructions du système d'exploitation et d'instructions de mots;

b) un processeur de bits pour le traitement d'instructions binaires d'enchaînement;

c) une mémoire du système d'exploitation, une mémoire à programme utilisateur, une mémoire de données avec représentation binaire du processus et des sousensembles périphériques; et

d) des bus pour la connexion des composants précités, caractérisée en ce que:

e) le processeur de mots (1) dispose d'un bus périphérique (11) particulier pour l'échange de données avec les sous-ensembles périphériques (4, 5), ainsi que d'un bus interne au système (12) qui est séparé de ce bus périphérique et qui sert à l'échange de données avec les autres composants mentionnés;

f) le transfert de données entre les sous-ensembles périphériques (4, 5) et la mémoire de données (8) passe exclusivement par le processeur de mots (1), avec arrêt du processeur de bits (2) en cas d'accès du processeur de mots (1) à la mémoire de données (8);

g) le processeur de bits (2) peut seulement accéder à la mémoire à programme utilisateur (7) et à la mémoire de données (8) par des bus internes séparés (21, 22) qui lui sont propres;

h) le processeur de bits (2), exécutant le programme utilisateur, passe à l'état d'arrêt à la reconnaissance d'une instruction de mot et initialise ainsi le processeur de mots (1) en vue de l'exécution de l'instruction de mot concernée; et

i) le processeur de mots (1) réinitialise le processeur de bits (2) après l'exécution de l'instruction de mot.

2. Commande selon la revendication 1, caractérisée en ce que le transfert de données de la représentation du processus entre les sous-ensembles périphériques (4, 5) et la mémoire de données (8), transfert qui passe par le processeur de mots (1), est organisé sur la largeur d'un mot.

3. Commande selon la revendication 1, caractérisée en ce que des sous-ensembles (6) pour le couplage d'un calculateur peuvent être connectés en supplément au bus périphérique (11).

serielle Schnittstelle

serielle Schnittstelle

Wort-prozessor  1

CLK

3

14

13

15

16

11

12

EROM  17

RAM  18

DE

DA

AE

AA

JRC

4

intellig.-Peripherie  5

Rechner-Kopplung  6

BUS

BUS

Anwenderprogramm-speicher  7

9

F

Bit-prozessor

W

E

9

21

22

Daten-Speicher  8

CLK

2

0121 037